# EUROPEAN PATENT SPECIFICATION

(11) **EP 2 350 721 B1**
(45) Date of publication and mention of the grant of the patent: **24.10.2018**
(21) Application number: 08875320.7
(22) Date of filing: 14.11.2008
(51) Int. Cl.: G02B 6/44, H02G 1/12, B26B 27/00, B26D 3/00, H01B 15/00

(54) **HINGED ARMS TOOL WITH JAWS FOR CUTTING AN ACCESS WINDOW IN THE SHEATH OF AN OPTICAL CABLE**
GELENKARMWERKZEUG MIT BACKEN ZUM SCHNEIDEN EINES ZUGANGSFENSTERS IN DEN MANTEL EINES OPTISCHEN KABELS
OUTIL À BRAS ARTICULÉS AVEC DES MÂCHOIRES POUR COUPER UNE FENÊTRE D'ACCÈS DANS LA GAINE D'UN CÂBLE OPTIQUE

(43) Date of publication of application: 03.08.2011
(73) Proprietor: Prysmian S.p.A., 20126 Milano (IT)
(72) Inventor: ABBIATI, Fabio, I-20126 Milano (IT); GRIFFITHS, Ian James, I-20126 Milano (IT)
(74) Representative: Colombo, Stefano Paolo
(86) International application number: PCT/EP2008/065598
(87) International publication number: WO 2010/054694

(56) References cited:
- GB-A- 1 276 869
- JP-A- 2002 064 916
- US-A- 4 741 104
- US-A- 4 947 549
- US-A- 6 079 105
- US-A1- 2005 166 405
- US-A1- 2007 286 564

## Description

### Technical field

The present invention relates to the field of optical cables and in particular to a tool for safely and precisely making an access window on an optical cable.

In the present description and claims, the expression "optical cable stripping tool" or "a tool for stripping an optical cable" or any other similar expression will designate a tool configured for making an access window on an optical cable, namely a tool for removing a portion of optical cable sheath and creating an access window without cutting any fibers inside the cable. Through such a window an access to optical fibers is provided. On the opposite side of the cut window the sheath is not removed.

### Background art

A possible scenario of use of the present invention is in passive optical networks, for instance in a Fiber-to-the-Home network (briefly FTTH).

A FTTH network is an optical access network providing a number of end users with communication services, e.g. with services requiring data transmission at a rate of some hundreds of Mbit/s or more.

Typically, a FTTH network comprises a distribution cabinet cooperating with a transport network. The distribution cabinet is often located in the basement of the building where the end users reside and is connected with termination boxes arranged, for example, at the various building floors via optical cables, housing one or more optical fibers.

An optical cable comprising a plurality of optical fibers typically departs from the distribution cabinet. Typically, an optical cable exiting a distribution cabinet and serving each floor of a given building to reach each end user is indicated as "in-line optical cable". Similarly, each optical fiber of an in-line optical cable is typically indicated as "in-line optical fiber".

Typically, the in-line optical cable vertically runs through the building from the basement up to all the building floors. The in-line optical cable is typically laid down within a duct, which is substantially vertically fixed to or within a building wall and which mechanically protects the in-line optical cable or simply installed on the wall without mechanical protection. The duct which receives an in-line optical cable is typically indicated as "in-line cable duct". The in-line optical cable can also be installed substantially "horizontally" to serve more workstations on the same floor.

Typically, an in-line optical fiber comprising one or more optical fibers, (generally two), branches out the in-line optical cable at a certain floor and exits a termination box for connecting the end user. Typically, the optical cable branching out the in-line optical cable is indicated as "drop cable". Each optical fiber of a drop cable is generally indicated as "drop optical fiber".

Connecting the distribution cabinet to a termination box requires extracting at least one in-line optical fiber from the in-line optical cable and connecting, typically by splicing, such an in-line optical fiber to a drop optical fiber of said drop cable exiting the termination box or taking directly the in-line optical fiber to the end-user. The optical connection between the in-line optical cable and the drop cable is typically made in a so-called "optical transition box".

In order to access in-line optical fibers within an in-line optical cable an optical cable stripping tool is used.

US 4,947,549 discloses a tool for slicing the gel filled buffer tube of a loose tube optical fiber construction including a set of blocks having a passage therein through which the buffer tube may be pulled, and a blade extending into the passage which lies within a plane containing the central axis of the passage. The tool may have a second blade oppositely directed from the first blade but spaced apart from the first blade in the longitudinal direction. Both blades may form an acute angle with respect to the passage exit. The blocks close on the tube by pivoting the handles of the tool.

US discloses a tool and method for accessing fibers within an in-line optical fiber cable. The tool can be used to access optical fibers within buffer tubes held in distribution cables. In one embodiment, the tool is clamped over a buffer tube and a blade is slid across a blade guide of the tool to facilitate the cutting of a fiber access window in the buffer tube. The method of accessing fibers within a fiber optic cable includes supporting a section of buffer tube and sliding a blade across the mid-portion of the supported section thereby creating optical fiber access windows therein.

The Italian patent application MI2008000008 (in the Applicant's name) discloses a tool for accessing optical fiber contained in a cable, said tool comprising a body with a longitudinal recess for partially housing a portion of said cable, and a blade transversely secured in said recess with a predetermined slant with respect to the longitudinal axis of said recess. The tool is positioned over the optical cable to house the cable into the longitudinal recess. Exerting a controlled pressure on the cable, the tool is tracked along the cable in the cutting direction parallel to the cable axis.

### Summary of the invention

The Applicant has noticed that the above known tools and methods for accessing fibers within an optical fiber cable has some problems.

In the case of the tool of US 2007/0286564, in order to cut a window a separate blade has to be provided. The tool, in fact, only provides a blade guide to facilitate the cutting of a fiber access window into a buffer tube. However, such tool requires a lot of free space around the in-line optical cable, such a space being not always available.

As the cutting of the sheath is made by the operator by a separate tool, it is possible that the sheath removal is made through more than one cut. This results in a corresponding number of small chips which are sometimes left on the site where the stripping operation is carried out. This has negative effect on the environment.

In addition, the tool according to US 2007/0286564 is rather bulky and a buffer tube has to be separated rather far from the other buffer tubes in order to be clamped by the tool.

The tool of MI2008000008 may not always provide an accurate window access. The depth and the size of the cut depend on the pressure exerted by the operator, which can be either excessive or insufficient. Furthermore the cable has to be fixed or held steady during the cutting because of the axial traction force applied thereupon for opening the window access would cause the cable to move thus making the cutting difficult if not impossible.

The Applicant faced the problem of providing a tool for accessing optical fibers contained within an optical cable, said tool being handy, easy to use and more efficient than the known tools and apt for making a precise and safe stripping of an optical cable without the necessity of keeping the cable steady during the operation.

For the purpose of the present description and of the appended claims, an optical cable is any tubular arrangement containing, directly or indirectly, optical fibers and comprising a sheath.

According to the present invention, the Applicant found that a tool provided with cutting devices connected to arms hinged to move said devices according to opposed trajectories, could produce a continuous cutting path enabling to open a window access in a single, simple and accurate maneuver with no stress or undesirable movement of the cable containing the optical fibers to be accessed.

In particular, the present invention provides a tool for cutting an access window on an optical cable, wherein the optical cable comprises a sheath. The tool comprises:
- a first arm and a second arm, said first and second arms being hinged at a pivot axis, said first and second arms having a first handle and jaw and a second handle and jaw, respectively;
- a first jaw head and a second jaw head respectively connected to the first and second jaws; and
- a first cutting device rigidly connected to the first jaw head and a second cutting device rigidly connected to the second jaw head for cutting a window in the sheath of the cable to be accessed when the handles are rotated to a closing configuration.

The tool also comprises a first backing device and a second backing device, wherein said first and second backing devices are configured for backing the cable when the window is cut in the sheath.

The first backing device may be rotatably connected to the first jaw head and the second backing device may be rotatably connected to the second jaw head.

Preferably, the first and second backing devices are configured for engaging the cable from a side which is substantially opposite to the cut window in the sheath.

Preferably, each of said first and second backing devices comprises at least one pin. The at least one pin may be rotatable.

Each of said first and second backing devices may be hinged at a pivot axis.

In one embodiment, the pivot axis can be changed for adjusting the tool to two or more cable sizes. For instance, the position of the pivot axis can be changed in three positions corresponding to three cable sizes.

The tool may further comprise a depth guide for limiting the penetration depth of the cutting device in the sheath of the cable.

The depth guide may comprise a tongue.

Preferably, the depth guide is rigidly arranged with respect to the cutting device.

In one embodiment, the tool further comprise an adjusting device for adjusting the maximum angle of the arms.

For the purpose of the present description and of the appended claims, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

### Brief description of the drawings

The present invention will become fully clear by reading the following detailed description to be read by referring to the accompanying drawings, wherein:
- Figure 1 is an axonometric schematic view of an optical cable stripping tool according to one embodiment of the present invention;
- Figure 1.1 is an axonometric schematic view of an optical cable stripping tool according to an example not part of the present invention;
- Figure 2 is a detail of the optical cable stripping tool of Figure 1;
- Figure 3 is a view similar to Figure 1 with the tool which is engaging a cable just before starting stripping thereof;
- Figure 4 is an axonometric schematic view similar to Figure 3, taken from a different angle;
- Figure 5 is a detail of the optical cable stripping tool of Figure 4;
- Figure 6 is an axonometric schematic view of the tool of Figure 1 in an intermediate position of cable stripping;
- Figure 7 is an axonometric schematic view of the tool of Figure 1 in a final position of cable stripping.

### Detailed description of preferred embodiments of the invention

The stripping tool according to embodiments of the present invention is schematically shown in the various Figures. However, the tool can have a shape different from the one which is shown.

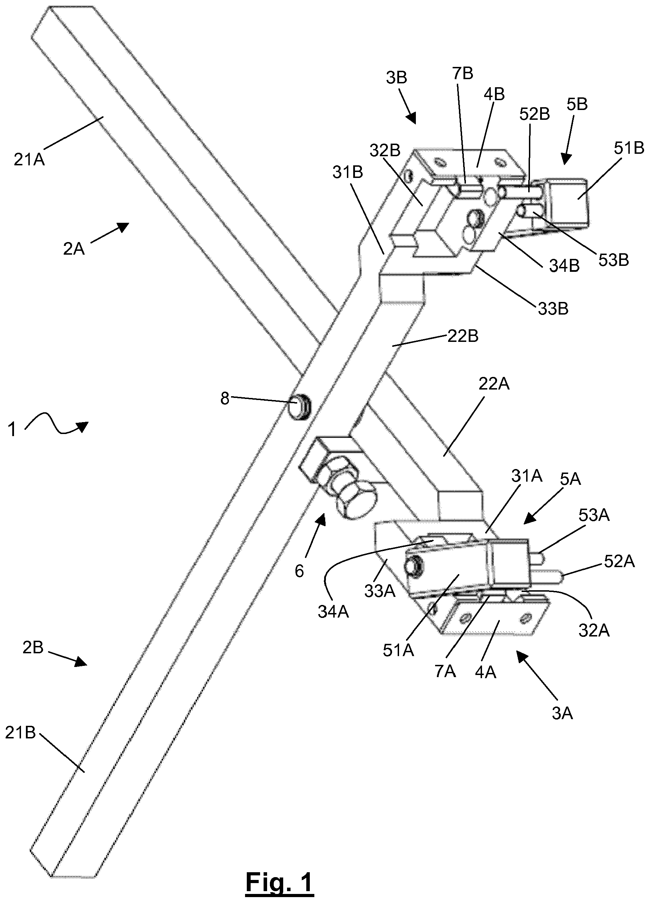

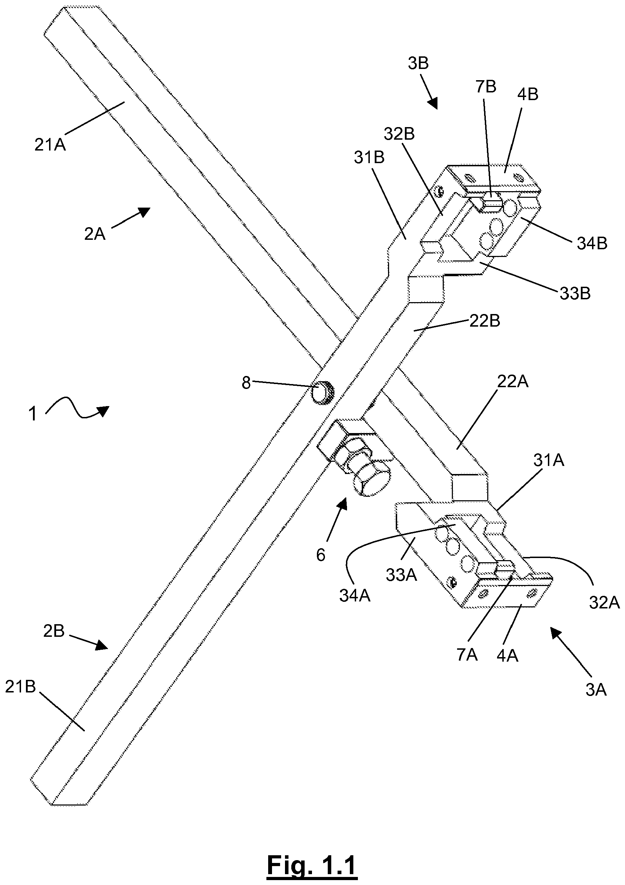

With first reference to Figures 1 and 1.1, the tool (either according to one embodiment of the invention in Figure 1 or an example not part of the invention in Figure 1.1) is designed by the reference number 1. Stripping tool 1 preferably comprises a first arm and a second arm 2A, 2B hinged at a pivot axis 8. A portion of each of the arms 2A, 2B represents a first and a second handle 21A, 21B, respectively. Another portion of each of the arms 2A, 2B represents a first and a second jaw 22A, 22B, and comprises a first and a second cutting device 4A, 4B, respectively. Preferably the portion representing the handles 21A, 21B is longer than the portion representing the jaws 22A, 22B.

In both Figures 1 and 1.1, the jaws 22A, 22B comprise respectively a first and a second head 3A, 3B. Said heads 3A, 3B can be substantially U- or joke- shaped.

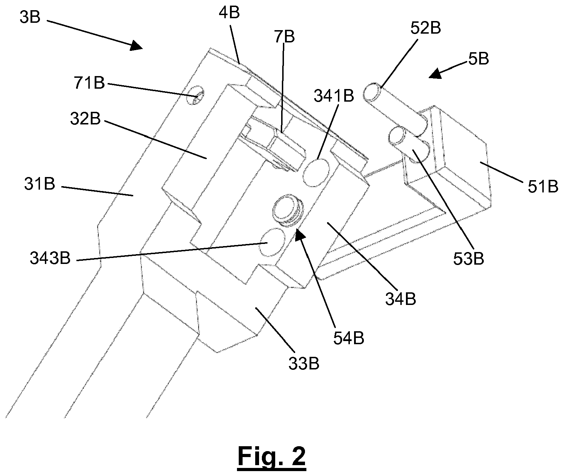

With reference to Figure 2, an exemplary description of second head 3B is given. Head 3B comprises two legs 31B, 33B connected at one end to the arm 2B. Preferably, at the opposite ends, they are connected to the above mentioned cutting device 4B. Preferably, the area which is delimited by the two legs 31B, 33B and by the cutting device 4B is an empty area. This results in a convenient space for passing through of the removed portion of cable sheath 91 as it will be shown below.

In Figures 1 and 1.1 (and in the detail of Figure 2), a first leg 31B is preferably provided with a cavity 32B for receiving a corresponding projecting part 34A of the head 3A of the second jaw 22A. Similarly, the second leg 33B is preferably provided with a projecting part 34B which can be received in a corresponding cavity 32A of the head 3A of the second jaw 22A.

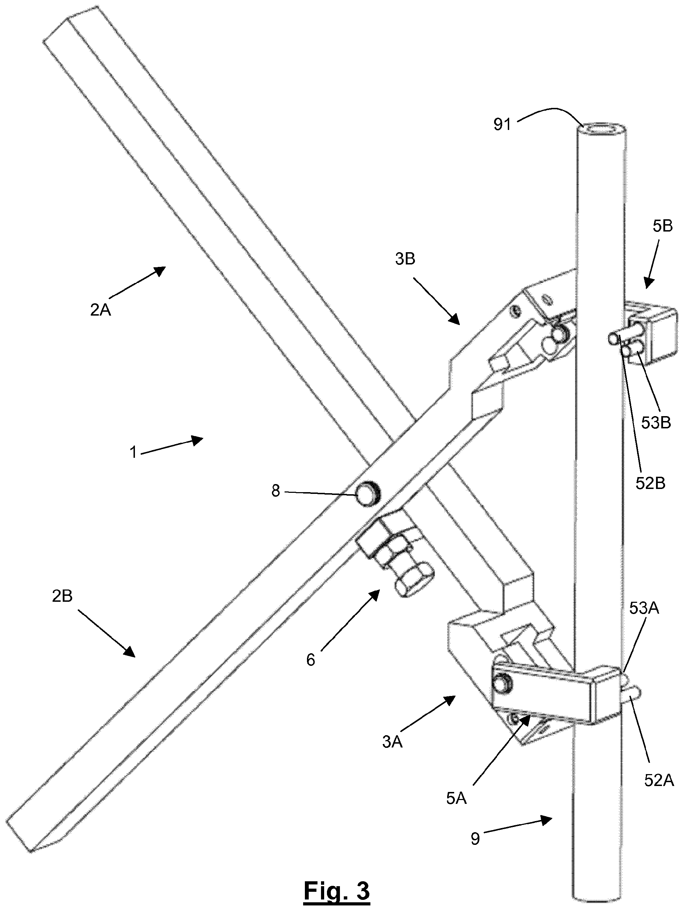

In the embodiment of Figure 1, a backing device 5B is provided in the head 3B. The backing device 5B is configured for engaging the cable 9 to be accessed from an opposite side than the stripping side (namely the side where the cutting devices operate) as it will be clear with reference to Figures 3 to 6.

Preferably, as shown in the embodiment of Figures 3 to 6, a first and second pivotable backing device 5A, 5B is provided respectively to the first and second head 3A, 3B. In one embodiment, the backing devices 5A, 5B comprise a first and second L-shaped bracket 51A, 51B hinged at a first and second hinge axis 54A, 54B in the projecting part 34A, 34B of the head 3A, 3B.

At the short end of the L-shaped bracket 51B at least one guiding pin 52B, 53B is provided for engaging the back of the cable 9 to be accessed. In one embodiment a single guiding pin is provided. In another embodiment (as shown in Figure 2), two guiding pins 52B, 53B are provided. In such another embodiment, one first pin 52B has preferably a first length whilst the second pin 53B has a second length shorter than the first length of the guiding pin 52B. Preferably, the second length is half of the first length for reasons which will become clearer in the following. The pin(s) 52B, 53B of the first head can be rotatable or fixed, namely not rotatable. The first option is more preferred. The whole applies to L-shaped bracket 51A, too.

The following description is referred to the head 3B and to the portions thereof (e.g., the pivotable backing device 5B), but the same features and functions can be shown by the head 3A and by the portions thereof (e.g., the pivotable backing device 5A).

Preferably, the pivotable backing device 5B is adjustable for adjusting the tool 1 to a plurality of cable sizes. In the shown embodiment, the pivotable backing device 5B is adjustable in correspondence of three different positions for accommodating the use of the tool 1 for three cable sizes. Typically, a first cable size corresponds to a 12 optical fiber cable and has an outer diameter of 8 mm, a second cable size corresponds to a 24 optical fiber cable and has an outer diameter of 12 mm and a third cable size corresponds to a 48 optical fiber cable and has an outer diameter of 14.5 mm. The adjustment is preferably provided by three holes (341B to 343B) in the projecting part 34B of the head 3B. Such three holes 341B to 343B provide three positions for the pivotable backing device 5B. The upper hole 341B (namely the one closer to the cutting device 4B) is adapted to operate on larger diameter optical cables 9 whilst the lower hole 343B (namely, the one which is more distant from the cutting device 4B) is adapted to operate on smaller diameter optical cables 9.

The head 3B, as said above, comprises a cutting device 4B. In one embodiment, the cutting device 4B comprises a plane blade with a wedge cutting edge. Preferably, the plane blade 4B is fixed to the ends of the two legs 31B, 33B as shown in Figure 2. Advantageously, the blade 4B is made of stainless steel or the like.

In one embodiment, the head 3B comprises a depth guide 7B as a safety measure for limiting the penetration depth of the cutting device 4B. Preferably, such a depth guide 7B comprises a tongue connected to the two legs 31B, 33B. A distance is provided between the cutting device 4B and the tongue 7B. Such a distance cooperates to define the maximum depth of the cutting device 4B in the sheath 91. Preferably, the depth guide 7B is rigidly connected to the two legs 31B, 33B of the head 3B at a blocking screw axis 71B.

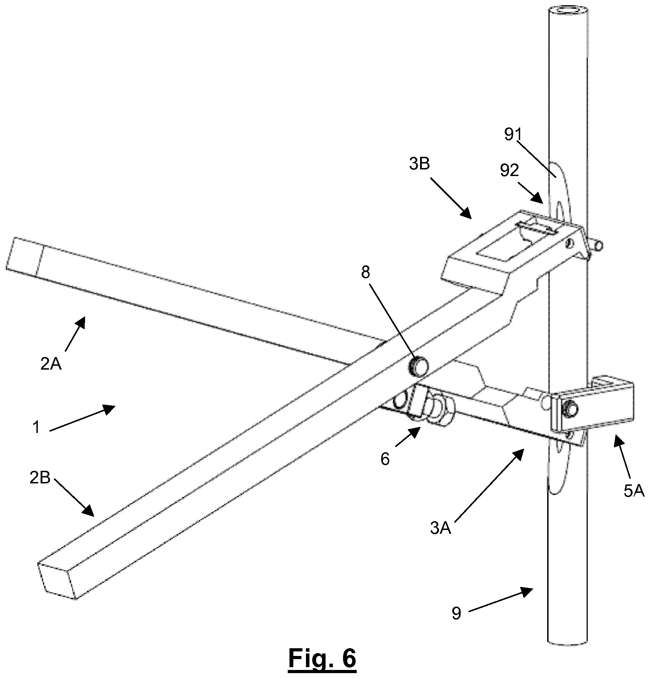

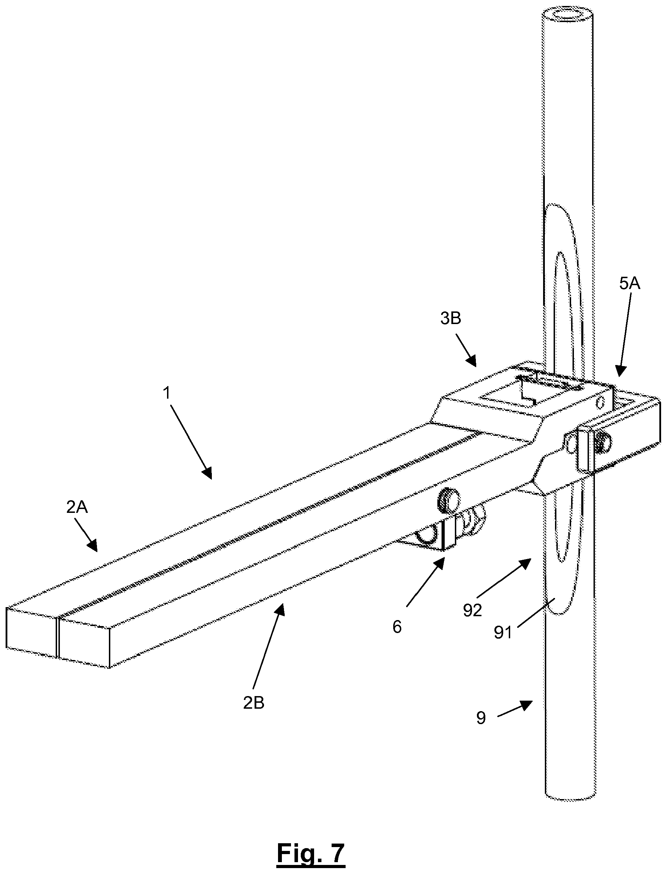

Preferably, each of the jaws 22a, 22B is shaped in a complementary manner so that the cutting edges of the cutting devices 4A, 4B, respectively, touch when the handles 21A, 21B are rotated and become closer (see Figures 6 and 7).

As said above, the other head 3A is shaped in a complementary manner with respect to head 3B. The same or similar parts of head 3A have been designed by the same reference numbers, but with the letter "A" in the place of "B".

Just to mention, the length of the second (shorter) pin 53A, 53B of each head 3A, 3B, respectively, has to be such that they do not interfere one with the other when the handles close.

In one embodiment, the tool 1 according to the present invention comprises an adjusting device 6 for adjusting the maximum angle of the arms 2A, 2B. Such an adjusting device 6 could comprise a screw device as schematically shown in Figures 1, 1.1, 3, 4, 6 and 7. The larger the maximum angle, the longer the open window 92 in the cable sheath 91.

Figure 3 shows the stripping tool 1 of Figure 1 ready for removing a portion of a sheath 91 of an optical cable 9 for creating a sheath window 92. Through such a sheath window 92 access to optical fibers is provided.

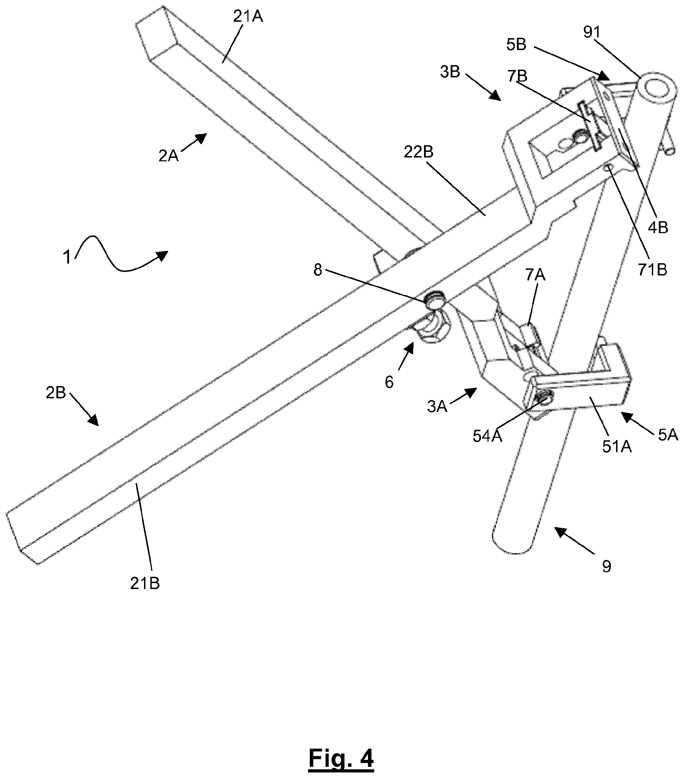

Figure 4 is similar to Figure 3 but it shows the tool 1 and the optical cable 9 from a different angle.

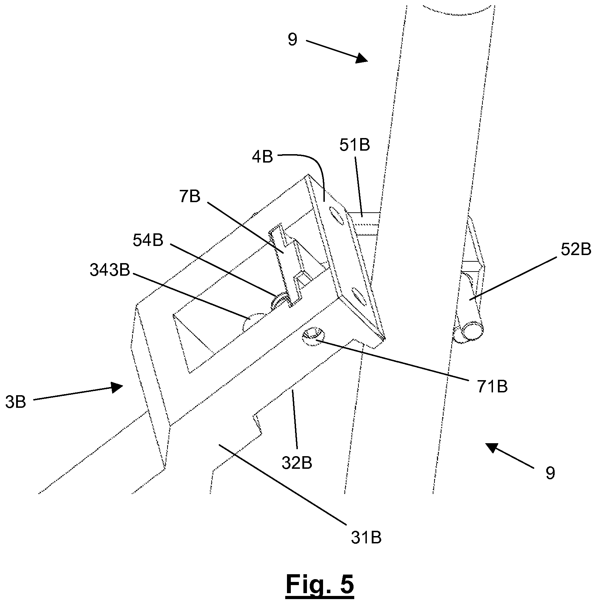

Figure 5 shows a detail of Figure 4.

Figure 6 shows the tool 1 of Figure 3 at an intermediate stage of the sheath stripping. The penetration depth starts from zero at the edges of the sheath window 92 and increases until the depth guide 7A, 7B begins working: from that point going towards the center of said window the penetration depth will be substantially constant. Indeed, in a very first portion of the window the optical fibers are not accessible because the penetration depth is lower than the sheath thickness.

As it is clear for a person skilled in the art, the cable sheath 91 is peeled by closing the arms of the tool. Figure 6 shows an aperture angle which is lower than the aperture angle of the tool 1 shown in Figure 5.

Finally, Figure 7 shows the tool of Figure 3 at a final stage of the sheath stripping. The aperture angle has now become null and the two heads 3A and 3B are nested together. In this final position, the cutting edges of the heads 92 touch and the window in the sheath is completed. Through the inner portion of the sheath window 92 access to the optical fibers is provided.

Through the arrangement according to the present invention, a precise open window is created in the sheath of the optical cable.

Profitably, according to the present invention, the stripping is performed in a very precise manner without the risk to damage the optical fibers during the stripping operation and without using highly skilled technicians.

The tool is robust and relatively compact. In particular, only a relatively reduced space is required at the cable side opposite to the stripping side.

## Claims

1. A tool (1) for cutting an access window (92) on an optical cable (9), wherein the optical cable comprises a sheath (91),
wherein the tool (1) comprises:
- a first arm (2A) and a second arm (2B), wherein the first and second arms (2A, 2B) are hinged at a pivot axis (8) so that, for each of the first and second arms, an handle (21A, 21B) and a jaw (22A, 22B), respectively, is provided;
- a first jaw head (3A) and a second jaw head (3B) which are connected to the jaws (22A, 22B) of the first and second arms (2A, 2B);
- a first cutting device (4A) rigidly connected to the first jaw head (3A) and a second cutting device (4B) rigidly connected to the second jaw head (3B) for cutting a window in the sheath (91) of the cable (9) when the handles (21A, 21B) are rotated to a closing configuration; and
- a first backing device (5A) and a second backing device (5B), wherein said first and second backing devices (5A, 5B) are configured for backing the cable (9) when the window (92) is cut in the sheath (91).

2. The tool of claim 1, wherein said first backing device (5A) is rotatably connected to the first jaw head (3A) and wherein said second backing device (5B) is rotatably connected to the second jaw head (3B).

3. The tool (1) of claim 1 or 2, wherein said first and second backing devices (5A, 5B) are configured for engaging the cable (9) from a side which is substantially opposite to the cut window (92) in the sheath (91).

4. The tool (1) of any of claims 1 to 3, wherein each of said first and second backing devices (5A, 5B) comprises at least one pin (52A, 52B; 53A, 53B).

5. The tool (1) of claim 4, wherein said at least one pin (52A, 52B; 53A, 53B) is rotatable.

6. The tool (1) of any of said claims 1 to 5, wherein each of said first and second backing devices (5A, 5B) is hinged at a pivot axis.

7. The tool (1) of claim 6, wherein the position of said pivot axis can be changed for adjusting the tool (1) to two or more cable sizes.

8. The tool (1) of claim 7, wherein the position of said pivot axis can be changed in three positions corresponding to three cable sizes.

9. The tool (1) of any of the preceding claims wherein it further comprises a depth guide (7A, 7B) for limiting the penetration depth of the cutting device in the sheath (91) of the cable (9).

10. The tool (1) of claim 9, wherein the depth guide (7A, 7B) comprises a tongue.

11. The tool (1) of claim 9 or 10, wherein the depth guide (7A, 7B) is rigidly arranged with respect to the cutting device (4A, 4B).

12. The tool (1) of any of the preceding claims wherein it further comprises an adjusting device (6) for adjusting the maximum angle of the arms (2A, 2B).

## Patentansprüche

1. Werkzeug (1) zum Schneiden eines Zugangsfensters (92) auf einem optischen Kabel (9), wobei das optische Kabel einen Mantel (91) aufweist,
wobei das Werkzeug (1) aufweist:
- einen ersten Arm (2A) und einen zweiten Arm (2B), wobei der erste und der zweite Arm (2A, 2B) an einer Schwenkachse (8) gelenkig so angebracht sind, dass jeweils für den ersten und den zweiten Arm ein Griff (21A, 21B) und eine Backe (22A, 22B) vorgesehen sind;
- einen ersten Backenkopf (3A) und einen zweiten Backenkopf (3B), die mit den Backen (22A, 22B) des ersten und des zweiten Arms (2A, 2B) verbunden sind;
- eine erste Schneideeinrichtung (4A), die mit dem ersten Backenkopf (3A) starr verbunden ist, und eine zweite Schneideeinrichtung (4B), die mit dem zweiten Backenkopf (3B) starr verbunden ist, um ein Fenster in den Mantel (91) des Kabels (9) zu schneiden, wenn die Griffe (21A, 21B) in eine Schließstellung gedreht werden; und
- eine erste Auflageeinrichtung (5A) und eine zweite Auflageeinrichtung (5B), wobei die erste und die zweite Auflageeinrichtung (5A, 5B) ausgebildet sind, als Auflage für das Kabel (9) zu dienen, wenn das Fenster (92) in den Mantel (91) geschnitten wird.

2. Werkzeug nach Anspruch 1, wobei die erste Auflageeinrichtung (5A) drehbar mit dem ersten Backenkopf (3A) verbunden ist, und wobei die zweite Auflageeinrichtung (5B) drehbar mit dem zweiten Backenkopf (3B) verbunden ist.

3. Werkzeug (1) nach Anspruch 1 oder 2, wobei die erste und die zweite Auflageeinrichtung (5A, 5B) ausgebildet sind, mit dem Kabel (9) von einer Seite aus in Eingriff zu treten, die im Wesentlichen dem ausgeschnittenen Fenster (92) in dem Mantel (91) gegenüberliegt.

4. Werkzeug (1) nach einem der Ansprüche 1 bis 3, wobei die erste und die zweite Auflageeinrichtung (5A, 5B) jeweils mindestens einen Stift (52A, 52B; 53A, 53B) aufweisen.

5. Werkzeug (1) nach Anspruch 4, wobei der mindestens eine Stift (52A, 52B; 53A, 53B) drehbar ist.

6. Werkzeug (1) nach einem der Ansprüche 1 bis 5, wobei die erste und die zweite Auflageeinrichtung (5A, 5B) jeweils an einer Schwenkachse gelenkig angebracht sind.

7. Werkzeug (1) nach Anspruch 6, wobei die Position der Schwenkachse zur Einstellung des Werkzeugs (1) auf zwei oder mehr Kabelgrößen einstellbar ist.

8. Werkzeug (1) nach Anspruch 7, wobei die Position der Schwenkachse entsprechend drei Kabelgrößen auf drei Positionen einstellbar ist.

9. Werkzeug (1) nach einem der vorhergehenden Ansprüche, das ferner eine Tiefenführung (7A, 7B) zur Begrenzung der Eindringtiefe der Schneideeinrichtung in dem Mantel (91) des Kabels (9) aufweist.

10. Werkzeug (1) nach Anspruch 9, wobei die Tiefenführung (7A, 7B) eine Zunge aufweist.

11. Werkzeug (1) nach Anspruch 9 oder 10, wobei die Tiefenführung (7A, 7B) in Bezug auf die Schneideeinrichtung (4A, 4B) starr angeordnet ist.

12. Werkzeug (1) nach einem der vorhergehenden Ansprüche, das ferner eine Justiereinrichtung (6) zur Einstellung des maximalen Winkels der Arme (2A, 2B) aufweist.

## Revendications

1. Outil (1) pour couper une fenêtre d'accès (92) sur un câble optique (9), dans lequel le câble optique comprend une gaine (91),
dans lequel l'outil (1) comprend :
- un premier bras (2A) et un second bras (2B), dans lequel les premier et second bras (2A, 2B) sont articulés au niveau d'un axe de pivotement (8) de telle sorte que, pour chacun des premier et second bras, une poignée (21A, 21B) et une mâchoire (22A, 22B), respectivement, sont prévues ;
- une première tête de mâchoire (3A) et une seconde tête de mâchoire (3B) qui sont connectées aux mâchoires (22A, 22B) des premier et second bras (2A, 2B) ;
- un premier dispositif de coupe (4A) connecté de façon solidaire à la première tête de mâchoire (3A) et un second dispositif de coupe (4B) connecté de façon solidaire à la seconde tête de mâchoire (3B) pour couper une fenêtre dans la gaine (91) du câble (9) lorsque les poignées (21A, 21B) sont tournées dans une configuration de fermeture ; et
- un premier dispositif de support (5A) et un second dispositif de support (5B), dans lequel lesdits premier et second dispositifs de support (5A, 5B) sont configurés pour supporter le câble (9) lorsque la fenêtre (92) est coupée dans la gaine (91).

2. Outil selon la revendication 1, dans lequel le premier dispositif de support (5A) est connecté de manière rotative à la première tête de mâchoire (3A) et dans lequel ledit second dispositif de support (5B) est connecté de manière rotative à la seconde tête de mâchoire (3B).

3. Outil (1) selon la revendication 1 ou 2, dans lequel lesdits premier et second dispositifs de support (5A, 5B) sont configurés pour venir en prise avec le câble (9) depuis un côté qui est sensiblement opposé à la fenêtre coupée (92) dans la gaine (91).

4. Outil (1) selon l'une quelconque des revendications 1 à 3, dans lequel chacun desdits premier et second dispositifs de support (5A, 5B) comprend au moins une broche (52A, 52B ; 53A, 53B).

5. Outil (1) selon la revendication 4, dans lequel ladite au moins une broche (52A, 52B ; 53A, 53B) peut pivoter.

6. Outil (1) selon l'une quelconque des revendications 1 à 5, dans lequel chacun desdits premier et second dispositifs de support (5A, 5B) est articulé au niveau d'un axe de pivotement.

7. Outil (1) selon la revendication 6, dans lequel la position dudit axe de pivotement peut être modifiée pour ajuster l'outil (1) à deux tailles de câble ou plus.

8. Outil (1) selon la revendication 7, dans lequel la position dudit axe de pivotement peut être modifiée dans trois positions correspondant à trois tailles de câble.

9. Outil (1) selon l'une quelconque des revendications précédentes, dans lequel il comprend en outre un guide de profondeur (7A, 7B) pour limiter la profondeur de pénétration du dispositif de coupe dans la gaine (91) du câble (9).

10. Outil (1) selon la revendication 9, dans lequel le guide de profondeur (7A, 7B) comprend une langue.

11. Outil (1) selon la revendication 9 ou 10, dans lequel le guide de profondeur (7A, 7B) est agencé de façon solidaire par rapport au dispositif de coupe (4A, 4B) .

12. Outil (1) selon l'une quelconque des revendications précédentes dans lequel il comprend en outre un dispositif d'ajustement (6) pour ajuster l'angle maximal des bras (2A, 2B).
